(19) **Europäisches Patentamt**
**European Patent Office**
**Office européen des brevets**

(11) Publication number: **0 051 411**
**B1**

# EUROPEAN PATENT SPECIFICATION

(45) Date of publication of patent specification: **29.05.85**

(51) Int. Cl.⁴: **H 01 M 6/18**

(21) Application number: **81305016.8**

(22) Date of filing: **23.10.81**

(54) Solid state electrolytes for electrochemical cells.

(30) Priority: **24.10.80 US 200277**

(43) Date of publication of application:
**12.05.82 Bulletin 82/19**

(45) Publication of the grant of the patent:
**29.05.85 Bulletin 85/22**

(84) Designated Contracting States:
**DE FR GB**

(56) References cited:
**FR-A-2 145 492**
**US-A-4 074 019**

**PATENTS ABSTRACTS OF JAPAN, vol. 4, no. 75 (E-13) (557) May 31, 1980 page 3 E 13**

(73) Proprietor: **RAYOVAC Corporation**
**101 East Washington Avenue**
**Madison Wisconsin 53703 (US)**

(72) Inventor: **Joshi, Ashok Vendimadhav**
**117 Shankar Niwas Shivaji**
**Park Road No.3 Bombay (IN)**
Inventor: **Sholette, William Paul**
**826 Martha Lane**
**Warminster Pennsylvania 18974 (US)**
Inventor: **Jatkar, Arun D.**
**43 St. Johns Street**
**Goshen New York 10924 (US)**

(74) Representative: **Wuesthoff, Franz, Dr.-Ing.**
**Patentanwälte Wuesthoff -v. Pechmann-Behrens-Goetz Schweigerstrasse 2**
**D-8000 München 90 (DE)**

# 0 051 411

**Description**

The present invention relates to solid state electrolytes that comprise lithium iodide and to electrochemical cells that include such electrolyte.

In order to produce a high energy density solid state battery, it is necessary to provide not only high energy density anodes and cathodes but also an effective ion-transport electrolyte. The electrolyte must be an electronic insulator and an electrolytic conductor. Among the number of solids which satisfy these criteria at room temperature, solid lithium iodide is known to be advantageous in that it has the capability of providing electrolytic conduction by the transport of lithium ions. This permits lithium, the most energy dense of the alkali metals, to be used as an anode. However, the electrolytic conductivity of pure lithium iodide is only about $10^{-7}$ $(ohm-cm)^{-1}$. To be useful, even in low drain microelectronic applications, the electrolytic conductivity must be increased. Without increasing the electrolytic conductivity of a lithium iodide electrolyte, a cell including of such an electrolyte is likely to have extraordinarily high internal resistance and a high potential drop for a given drain rate. This problem has been recognized and solutions have been proposed. For example, in U.S. Patent Specification No. 3,837,920, (corresponding to FR—A—2 145 492, it has been proposed to add to a lithium iodide matrix a material from the group of calcium iodide, oxide and chloride, barium iodide and oxide, beryllium iodide and chloride, magnesium iodide and chloride, barium chloride and strontium iodide and chloride. This proposal is not totally satisfactory in that the metal ions in the materials mentioned are reducible to the metallic state by lithium and thus there is a risk of producing an electronic short-circuit across the electrolyte between the anode and the cathode.

It has now been discovered that a composition comprising an intimate, heat-treated interdiffused mixture of lithium iodide and one or more of boron triiodide, phosphorus triiodide, arsenic triiodide, silicon tetraiodide, tellurium tetraiodide and germanium tetraiodide can provide an electrolyte with a relatively high electrolytic conductivity, very low electronic conductivity and freedom from the risk of electronic shorting. It is thereby suitable for use in a high energy density solid state cell using lithium or lithium-rich alloys as the anode and conventional materials as the cathode.

According to the present invention, there is provided a solid state electrolyte comprising lithium iodide, at least a small but effective amount and not more than 16 mole percent in total of one or more of boron triiodide, phosphorus triiodide, arsenic triiodide, silicon tetraiodide, tellurium tetraiodide and germanium tetraiodide interdiffused with the lithium iodide. A preferred electrolyte may contain from 0.4 to 5 mole percent, in total, of one or more of silicon tetraiodide, arsenic tetraiodide, and tellurium tetraiodide. The electrolyte can contain known additives, e.g. up to 70 mole percent of alumina and/or silica, and small amounts of other materials miscible with the interdiffused mass. These materials include impurities normally associated with the commercially available iodides mentioned hereinbefore and in general inclusion of such materials is not desirable but rather the result of inevitable contamination which occurs in manufacturing processes.

$PI_3$ and $BI_3$ are particularly useful materials to be interdiffused with LiI to make electrolytes of the present invention. It is preferable to maintain the amount of phosphorus and/or boron triiodide in the electrolytes of the present invention in the range of from 0.005 to 16 mole percent, more preferably from 0.8 to 12 mole percent and advantageously from 2 to 12 mole percent. A preferred electrolyte according to the present invention comprises, in mole percent, from 49 to 65% lithium iodide, from 1 to 1.5% in total of phosphorus triiodide and/or boron triiodide, and from 35 to 50% alumina. An electrolyte of the present invention may be made by thoroughly blending appropriate amounts of powdered phosphorus triiodide and boron triiodide (or one of the other non metallic iodides) and lithium iodide powder, heating the blended powders in an inert atmosphere at a temperature in excess of the melting point of phosphorus triiodide (61°C) or boron triiodide (43°C) for a time sufficient to thoroughly interdiffuse the two materials, cooling the resultant interdiffused blend and grinding to form a fine powder product. More particularly, heating for one half hour at temperatures in the range of 150°C to 200°C has been found to be adequate to provide the phosphorus triiodide-containing interdiffused electrolyte of the present invention.

Table I sets forth exemplary electrolytes of the present invention made by the process described in the previous paragraph.

TABLE I

| Example No. | LiI (mole %) | $PI_3$ (mole %) | Conductivity $(ohm-cm)^{-1}$ |
|---|---|---|---|
| I | 95 | 5 | $3.5 \times 10^{-6}$ |
| II | 98 | 2 | $2.6 \times 10^{-6}$ |
| III | 92.4 | 7.6 | $2.7 \times 10^{-6}$ |
| IV | 85 | 15 | $9.3 \times 10^{-7}$ |

2

When the electrolyte contains alumina or silica, it can be ground into a $PI_3$- or $BI_3$-LiI mixture prior to interdiffusion or the interdiffused mass without alumina or silica can be ground to a powder, mixed and ground with alumina or silica powder and subjected to a second interdiffusion. $BI_3$ is a useful ingredient in compositions containing alumina. When they contain alumina and/or silica, the electrolytes of the present invention may comprise, in mole percent, from 0.005 to 16% of non-metallic iodide, for example phosphorus and/or boron triiodide, and advantageously from 0.8% to about 12% phosphorus triiodide, from 33% to 99% lithium iodide and from 0 to 70% aluminium oxide or silicon oxide. Although this specification is written in terms of the electrolytes containing, for example $PI_3$, $BI_3$, $Al_2O_3$ and LiI, this wording is not intended to imply that during interdiffusion there may not be some inter-reaction among the ingredients or that the electrolyte of the present invention contains those compounds as such. The language employed merely implies that the materials used to make the electrolytes are present, albeit perhaps in a reacted state, in the final electrolyte.

Examples of alumina-containing compositions are as follows:

TABLE II

| Ex. No. | LiI (mole %) | $PI_3/BI_3$ (mole %) | $Al_2O_3$ (mole %) | Conductivity (ohm-cm)$^{-1}$ |
|---|---|---|---|---|
| V | 88.2 | 1.8 $PI_3$ | 10 | $2.0 \times 10^{-5}$ |
| VI | 85.5 | 4.5 $PI_3$ | 10 | $8.6 \times 10^{-6}$ |
| VII | 78.4 | 1.6 $PI_3$ | 20 | $2.6 \times 10^{-5}$ |
| VIII | 76 | 4.0 $PI_3$ | 20 | $1.3 \times 10^{-5}$ |
| IX | 68.6 | 1.4 $PI_3$ | 30 | $5.0 \times 10^{-5}$ |
| X | 66.5 | 3.5 $PI_3$ | 30 | $3.7 \times 10^{-5}$ |
| XI | 63.2 | 1.3 $PI_3$ | 35 | $5.2 \times 10^{-5}$— $1.5 \times 10^{-4}$* |
| XII | 57 | 3.0 $PI_3$ | 40 | $3.7 \times 10^{-5}$ |
| XIII | 49 | 1.0 $PI_3$ | 50 | $5.1 \times 10^{-5}$ |
| XIV | 73.5 | 1.5 $BI_3$ | 25 | $1.2 \times 10^{-5}$ |
| XV | 63.7 | 1.3 $BI_3$ | 35 | $5.5 \times 10^{-5}$ |
| XVI | 53.9 | 1.1 $BI_3$ | 45 | $1.1 \times 10^{-4}$ |

*The range represents results obtained from various samples made with H51 grade alumina supplied by Alcoa in which the fineness of grind of the alumina granules was varied. Higher conductivities are obtained with electrolytes made with more finely ground alumina.

Table II shows that compositions containing, in mole percent, from 35% to 50% alumina, from 49% to 65% lithium iodide and from 1% to 1.5% of either boron triiodide or phosphorus triiodide are particularly advantageous in exhibiting high electrolytic, lithium ion transport conductivity.

Additional examples of solid state electrolytes using a small but effective amount up to about 5 mole percent of iodide additive in accordance with the present invention are set forth in Table III.

TABLE III

| Ex. No. | LiI (mole %) | Additive | Additive mole % | Al$_2$O$_3$ (mole %) | Conductivity at 26°C (ohm-cm)$^{-1}$ |
|---|---|---|---|---|---|
| XVII | 99.8 | AsI$_3$ | <0.016 | — | 6.4×10$^{-7}$ |
| XVIII | 59.9 | AsI$_3$ | <0.0162 | 40 | 4×10$^{-5}$ |
| XIX | 98 | SiI$_4$ | 2 | — | 4—7.5×10$^{-7}$ |
| XX | 58.8 | SiI$_4$ | 1.2 | 40 | 3×10$^{-5}$ |
| XXI | 99.9 | TeI$_4$ | 0.005 | — | 4.5—7×10$^{-7}$ |
| XXII | 59.9 | TeI$_4$ | 0.004 | 40 | 4×10$^{-5}$ |

The electrolytes of the present invention can be used in solid state electrochemical cells using lithium metal as the anode and a wide variety of compatible cathode materials. Suitable cathodes, mounted on a cathode current collector or packed in one portion of a button cell, include, for example, mixtures of bismuth tribromide, titanium disulphide and bismuth or bismuth tribromide, titanium disulphide and iodine or an iodine adduct with poly-2-vinylpyridine, with or without admixed electronic conductivity enhancers. An example of a solid state cell using the solid electrolyte of the present invention is now given.

Example XXIII

A solid state cell employing the electrolyte of Example I, a lithium anode and a cathode comprising a mixture of BiBr$_3$, TiS$_2$, and I$_2$ had an open circuit potential at 37°C of 2.81V and an initial discharge voltage of 2.71V under a 120 kilo-ohm external load.

Data regarding room temperature open circuit voltages (OCV) and short circuit current (SCC) of solid state electrochemical cells using electrolytes of Examples No. XVIII, XX and XXII are set forth in Table IV. The cells used to provide the data in Table IV each had a lithium anode, a cathode made of a mixture of bismuth tribromide, titanium disulphide and bismuth metal powder and an electrolyte as indicated in the Table.

TABLE IV

| Example No. | Electrolyte | OCV | SCC |
|---|---|---|---|
| XXIV | Ex. XVIII | 2.556V | 4.92 mA/cm$^2$ |
| XXV | Ex. XX | 2.578V | 3.66 mA/cm$^2$ |
| XXVI | Ex. XXII | 2.582V | 3.80 mA/cm$^2$ |

**Claims**

1. A solid state electrolyte comprising lithium iodide, characterised in that the electrolyte includes at least a small but effective amount and not more than 16 mole percent in total of one or more of boron triiodide, phosphorus triiodide, arsenic triiodide, silicon tetraiodide, tellurium tetraiodide and germanium tetraiodide interdiffused with the lithium iodide.

2. An electrolyte as claimed in claim 1, characterised in that it includes up to 70 molar percent in total of alumina and/or silica.

3. An electrolyte as claimed in claim 1 or claim 2, characterised in that it includes in mole percent, from 0.005 to 16% in total of phosphorus triiodide and/or boron triiodide.

4. An electrolyte as claimed in claim 3, characterised in that it includes, in mole percent, from 0.8 to 12% in total of phosphorus triiodide and/or boron triiodide.

5. An electrolyte as claimed in claim 3, characterised in that it consists of an interdiffused mixture of from 1 to 16 mole percent phosphorus triiodide, with the balance being esentially lithium iodide.

6. An electrolyte as claimed in claim 4, characterised in that it comprises, in mole percent, from 49 to 65% lithium iodide, from 1 to 1.5% in total of phosphorus triiodide and/or boron triiodide, and from 35 to 50% alumina.

7. An electrolyte as claimed in claim 6, characterised in that it consists of, in mole percent, about 63% lithium iodide, about 1.3% phosphorus triiodide, and about 35% alumina.

8. An electrolyte as claimed in any one of claims 1 to 4, characterised in that it contains from 33 to 99 molar percent of lithium iodide.

9. An electrolyte as claimed in claim 1 or claim 2, characterised in that it includes from 0.4 to 5 mole percent in total of one or more of arsenic triiodide, silicon tetraiodide and tellurium tetraiodide.

4

10. An electrochemical cell having a lithium anode, an electrolyte as claimed in any one of claims 1 to 9 and a compatible cathode.

## Revendications

1. Électrolyte solide comprenant du iodure de lithium, caracterisé en ce que l'électrolyte contient au moins une quantité petite mais efficace, et pas plus que 16% par mole au total, d'un ou plusieurs des triiodures de bore, de phosphore et d'arsène et des tetraiodures de silicium, de tellure et de germanium, interdiffusés avec le iodure de lithium.

2. Électrolyte selon la revendication 1, caracterisé en ce qu'il contient jusqu'à 70% par mole au total d'alumine et/ou de silice.

3. Électrolyte selon l'une quelconque des revendications 1 ou 2, caracterisé en ce qu'il contient 0,005 à 16% par mole au total de triodures de phosphore et/ou de bore.

4. Électrolyte selon la revendication 3, caracterisé en ce qu'il contient 0,8 à 12% par mole au total de triiodures de phosphore et/ou de bore.

5. Électrolyte selon la revendication 3, caracterisé en ce qu'il consiste en un mélange interdiffusé de 1 à 16% par mole de triiodure de phosphore, la balance étant essentiellement du iodure de lithium.

6. Électrolyte selon la revendication 4, caracterisé en ce qu'il comprend par mole 49 à 65% de iodure de lithium, 1 à 1,5% au total de triiodures de phosphore et/ou de bore et 35 à 50% d'alumine.

7. Électrolyte selon la revendication 6, caracterisé en ce qu'il comprend par mole environ 63% de iodure de lithium, environ 1,3% de triiodure de phosphore et environ 35% d'alumine.

8. Électrolyte selon l'une quelconque des revendications 1 à 4, caracterisé en ce qu'il contient 33 à 99% par mole de iodure de lithium.

9. Électrolyte selon l'une quelconque des revendications 1 ou 2, caracterisé en cequ'il contient 0,4 à 5% par mole au total d'un ou plusieurs de triiodure d'arsène et de tetraiodures de silicium et de tellure.

10. Pile électrochimique comprenant une anode en lithium, (et) un électrolyte selon l'une quelconque des revendications 1 à 9 et une cathode compatible.

## Patentansprüche

1. Feststoff-Elektrolyt, umfassend Lithiumiodid, dadurch gekennzeichnet, daß der Elektrolyt mindestens eine kleine, aber wirksame Menge und nicht mehr als 16 mol-% insgesamt Bortriiodid, Phosphortriiodid, Arsentriiodid, Siliciumtetraiodid, Tellurtetraiodid und/oder Germaniumtetraiodid, eindiffundiert in das Lithiumiodid, enthält.

2. Elektrolyt nach Anspruch 1, dadurch gekennzeichnet, daß er bis zu 70 mol-% insgesamt Tonerde und/oder Kieselsäure enthält.

3. Elektrolyt nach Anspruch 1 oder 2, dadurch gekennzeichnet, daß, er insgesamt 0,005 bis 16 mol-% Phosphortriiodid und/oder Bortriiodid enthält.

4. Elektrolyt nach Anspruch 3, dadurch gekennzeichnet, daß er insgesamt 0,8 bis 12 mol-% Phosphortriiodid und/oder Bortriiodid enthält.

5. Elektrolyt nach Anspruch 3, dadurch gekennzeichnet, daß er aus einem ineinander diffundierten Gemisch aus 1 bis 16 mol-% Phosphortriiodid und als Rest im wesentlichen Lithiumiodid besteht.

6. Elektrolyt nach Anspruch 4, dadurch gekennzeichnet, daß er 49 bis 65 mol-% Lithiumiodid, 1 bis 1,5 mol-% insgesamt Phosphortriiodid und/oder Bortriiodid und 35 bis 50 mol-% Tonerde umfaßt.

7. Elektrolyt nach Anspruch 6, dadurch gekennzeichnet, daß er aus etwa 63 mol-% Lithiumiodid, etwa 1,3 mol-% Phosphortriiodid und etwa 35 mol-% Tonerde besteht.

8. Elektrolyt nach einem der Ansprüche 1 bis 4, dadurch gekennzeichnet, daß er 33 bis 99 mol-% Lithiumiodid enthält.

9. Elektrolyt nach Anspruch 1 oder 2, dadurch gekennzeichnet, daß er 0,4 bis 5 mol-% insgesamt Arsentriiodid, Siliciumtetraiodid und/oder Tellurtetraiodid enthält.

10. Electrochemische Zelle mit einer Lithiumanode, einem Elektrolyten nach einem der Ansprüche 1 bis 9 und einer verträglichen Kathode.